# EUROPEAN PATENT APPLICATION

(11) **EP 1 923 364 A1**
(43) Date of publication of application: **21.05.2008**
(21) Application number: 06782490.4
(22) Date of filing: 08.08.2006
(51) Int. Cl.: C03C 21/00, F21S 2/00, F21V 8/00, F21Y 101/02, F21Y 103/00

(54) **GLASS SUBSTRATE WITH LIGHT DIRECTIVITY AND ILLUMINATOR EMPLOYING THE SAME**

(30) Priority: 08.08.2005 JP 2005230172
(71) Applicant: National Institute of Advanced Industrial Science and Technology, Tokyo 100-8921 (JP); ISUZU GLASS CO., LTD., Osaka-shi, Osaka 557-0063 (JP)
(72) Inventor: KADONO, Kohei, Ikeda-shi, Osaka 5638577 (JP); SUETSUGU, Tatsuya, Osaka-shi, Osaka 5570063 (JP); KAGA, Naoko, Osaka-shi, Osaka 5570063 (JP); YAMASHITA, Naoto, Osaka-shi, Osaka 5570063 (JP); UMEDA, Hironori, Osaka-shi, Osaka 5570063 (JP); EINISHI, Toshihiko, Osaka-shi, Osaka 5570063 (JP)
(74) Representative: Manley, Nicholas Michael
(86) International application number: PCT/JP2006/315664
(87) International publication number: WO 2007/018212

(57) **Abstract**

The present invention provides a high-precision planar light source with a sufficiently uniform luminance and sufficient light directivity to direct light to travel in a specific direction, using a simple production process. More specifically, the invention provides: a glass substrate with light directivity produced by applying a paste containing at least one member selected from the group consisting of lithium compounds, sodium compounds, potassium compounds, rubidium compounds, cesium compounds, copper compounds, silver compounds, and thallium compounds, an organic resin, and an organic solvent to one or both sides of a glass substrate containing an alkali metal as a glass component, and then performing heat treatment at a temperature lower than the softening temperature of the glass substrate; and a planar light source using the glass substrate.

## Description

### TECHNICAL FIELD

The present invention relates to a glass substrate with light directivity, and an illuminator using the same. "Light directivity" refers to controlling (directing) light rays to travel in a specific direction.

### BACKGROUND ART

In recent years, planar (flat) light sources have been used as backlights for exposure devices, signboards, liquid crystal displays, etc., and have also been used as lighting systems in interior spaces, such as ceilings, wall surfaces, etc.

The planar light source is an illuminator that injects light into a planar substrate and emits the incident light from the entire plane (viewed surface). Considering the application, the emitted light must provide a uniform luminance over the entire viewed surface and travel in a specific direction. In particular, emitting light in a direction perpendicular to the viewed surface means emitting light effectively to the viewer side, and is thus important in terms of light utilization efficiency.

Devices that have the function of injecting light radiated from point-like or linear light-emitting sources ("light-emitting source" refers to a source from which light to be injected onto a plane is radiated) into a diffuser panel (a frosted glass-like plane) or the like to scatter the light in all directions in the diffuser panel, and then emit the light from the viewed surface have been used as planar light sources.

However, when light is merely scattered using a diffuser panel and emitted from the viewed surface, the light is emitted in various directions from the viewed surface. Therefore, such a device does not satisfactorily meet the light-directivity requirement, and cannot be a planar light source with excellent light utilization efficiency. Furthermore, in many cases, it is difficult to completely eliminate luminance nonuniformity of the light-emitting sources. More specifically, the viewed surface tends to have a non-uniform luminance, i.e., parts that are close to light-emitting sources have high luminance, whereas parts that are some distance from the light-emitting sources have low luminance.

To remedy the above problem, a method has been proposed in which light injected from light-emitting sources into a diffuser panel is passed through a microlens array to emit the light in a specific direction. In the proposed technique, the light that is passed through the microlens array is emitted in a direction perpendicular to the microlens array. That is, in the above technique, the microlens array functions as a substrate with light directivity. When light is passed through such a microlens array and emitted, luminance nonuniformity of the light-emitting sources is unlikely to occur.

For example, Patent Documents 1 to 3 disclose lighting systems using a microlens array as a substrate with light directivity. In these techniques, light radiated from light-emitting sources is passed through a microlens array to emit the light in a direction perpendicular to the viewed surface. More specifically, Patent Document 3 discloses a planar light source comprising: a plurality of light-emitting elements that are scattered on a plane; and optical elements arranged to correspond with the light emitted from the light-emitting elements, so that the light that is passed through the optical elements is emitted in a direction that is approximately perpendicular to the plane. FIG. 1 shows schematic diagrams of the planar light source described in Patent Document 3. Illustration 1 in FIG. 1 shows a microlens array thereof; Illustration 2 in FIG. 1 shows how light radiated from LED light sources (light-emitting sources) passes through a microlens array arranged to correspond with the light-emitting sources, whereby the light is emitted in a direction perpendicular to the substrate (array substrate).

Microlens arrays used in prior-art planar light sources are produced, for example, by pressing a metal mold having many indentations of a submillimeter size on the surface against a substrate such as an organic polymer substrate or a glass substrate. Microlens arrays can also be produced by a method comprising applying a very small number of droplets of a thermosetting or photosetting resin to a substrate by ink jet printing or like method, and then curing the droplets. Alternatively, when a glass substrate is used, microlens arrays can also be produced by a method comprising lithographically masking the substrate, and then immersing the substrate in a molten salt, such as silver nitrate, to perform an ion exchange between an alkaline component in the glass and ions in the molten salt, such as silver ions, thereby forming a region having a gradient refractive-index distribution near the substrate surface.

However, there is still room for improvement in these production methods. More specifically, although the method of producing a microlens array comprising press molding an organic polymer substrate is comparatively inexpensive, the obtained microlens array is insufficient in terms of precision, stability, and reliability, because it comprises a polymer. For example, polymer deterioration occurs over time due to the irradiation of UV light and visible light contained in the light-emitting source. Furthermore, deformation by heat from the light-emitting source may occur.

A microlens array produced by press molding a glass substrate has high precision and high reliability. However, because a high temperature is required during the pressing, the metal mold deteriorates quickly, which tends to result in low productivity and high costs, method of producing a microlens array by ion exchange with a molten salt also has the following two problems.

The first problem involves controlling the conditions of the molten salt at the time of the ion exchange. The ion exchange rate and the rate of ion diffusion in a glass substrate depend on the temperature of the molten salt. The liquid phase temperature of the molten salt depends on the mixing ratio (composition) of the molten salt, and the ion exchange temperature can be controlled only at temperatures equal to or higher than the liquid phase temperature of the molten salt. Therefore, there are cases in which the concentration of ions in the molten salt and the ion exchange temperature cannot be controlled independently. To produce a gradient index lens array having a desired refractive-index profile by an ion exchange method, it is not easy to select the appropriate ion exchange conditions, such as the molten salt composition, temperature, immersion time, etc., and a high level of expertise is required. Furthermore, when using ions that are prone to oxidation in air, the ion exchange needs to be performed in a reducing atmosphere.

The second problem is the application of an ion exchange-blocking film. When ion exchange is performed using a molten salt, it is necessary to apply an ion exchange-blocking film over the entire substrate except for the regions where a gradient refractive-index distribution is to be formed. Photolithography is generally used to apply an ion exchange-blocking film; however, a complicated process is required to form such a blocking film.
Patent Document 1: Japanese Unexamined Patent Publication No. 2004-111170
Patent Document 2: Japanese Unexamined Patent Publication 2004-227835
Patent Document 3: Japanese Unexamined Patent Publication 2002-49326

### DISCLOSURE OF THE INVENTION

### PROBLEMS TO BE SOLVED BY THE INVENTION

A primary object of the invention is to provide a high-precision planar light source having sufficiently uniform luminance and sufficient light directivity to direct light in a specific direction (hereinafter sometimes referred to as "light directivity") by a simple production process.

### MEANS FOR SOLVING THE PROBLEM

To achieve the above object, the present inventors carried out extensive research and found the following. When a specific paste comprising at least one compound selected from the group consisting of lithium compounds, sodium compounds, potassium compounds, rubidium compounds, cesium compounds, copper compounds, silver compounds, and thallium compounds is applied to a glass substrate comprising an alkali metal as a glass component to disperse Li⁺ ions, Na⁺ ions, K⁺ ions, Rb⁺ ions, Cs⁺ ions, Cu⁺ ions, Ag⁺ ions, Tl⁺ ions, or the like into the glass substrate through the applied surface and thereby form a region or regions that differ in refractive index from the rest of the glass substrate (hereinafter sometimes referred to as "refractive-index-modulated region"), and the thus-obtained material is used as a glass substrate with light directivity, the above object can be achieved. The present invention has been accomplished based on this finding.

More specifically, the present invention provides the following glass substrates with light directivity and illuminators using such substrates.
1. A glass substrate with light directivity produced by applying a paste comprising at least one member selected from the group consisting of lithium compounds, sodium compounds, potassium compounds, rubidium compounds, cesium compounds, copper compounds, silver compounds, and thallium compounds; an organic resin; and an organic solvent to one or both sides of a glass substrate comprising an alkali metal as a glass component, and performing a heat treatment at a temperature lower than the softening temperature of the glass substrate.
2. A glass substrate with light directivity according to Item 1 wherein the paste is applied in circle or line form.
3. A glass substrate with light directivity according to Item 1 wherein the paste is applied as a plurality of circles in such a manner that the distance between the centers of adjacent circles is not more than 100 µm.
4. A glass substrate with light directivity according to Item 1 wherein the paste is applied as a plurality of parallel lines in such a manner that the distance between the central axes of adjacent lines is not more than 100 µm.
5. A glass substrate with light directivity according to Item 1 wherein the paste is applied by screen printing or ink-jet printing.
6. A glass substrate with light directivity according to item 1 wherein the glass substrate comprises glass containing at least 2% by weight of an alkali metal, calculated on an oxide basis, the glass being a silicate glass, a borosilicate glass, a phosphate glass, or a fluorophosphate glass.
7. An illuminator comprising: 1) the glass substrate with light directivity of Item 1; and 2) means for injecting light into the substrate.
8. An illuminator according to Item 7 wherein the means for injecting light into the substrate is a device for injecting light radiated from an LED element, an organic EL element, or an inorganic EL element.
9. An illuminator according to Item 7 wherein the means for injecting light into the substrate is a device for injecting light radiated from a halogen lamp, a metal halogen lamp, a hot cathode tube, or a cold cathode tube.

The glass substrate with light directivity and the illuminator using the substrate according to the present invention are described below in detail.

### Glass Substrate with Light Directivity

The glass substrate with light directivity of the invention is produced by applying a paste comprising: at least one member selected from the group consisting of lithium compounds, sodium compounds, potassium compounds, rubidium compounds, cesium compounds, copper compounds, silver compounds, and thallium compounds; an organic resin; and an organic solvent to one or both sides of a glass substrate comprising an alkali metal as a glass component, and performing a heat treatment at a temperature lower than the softening temperature of the glass substrate.

The glass substrate with light directivity of the invention has paste-applied, heat-treated portions and their vicinities as refractive-index-modulated regions that are different in refractive index from the rest of the substrate. Since the glass substrate of the invention comprises such refractive-index-modulated regions, light injected from light-emitting sources into the glass substrate is dispersed in the glass substrate and then passed through the refractive-index-modulated regions, so that the light can be emitted in a direction perpendicular to the substrate. Therefore, the glass substrate with light directivity of the invention can be advantageously used as a component of a planar light source.

To produce the glass substrate with light directivity of the invention, it is necessary to use a glass substrate containing an alkali metal as a glass component.

Examples of the alkali metal contained in the glass substrate include Li, Na, K, Rb, Cs, and the like. Among these, Li, Na and K are preferable, and Na is particularly preferable. Such alkali metals may exist in an ionic state, or may exist as an oxide. Such alkali metals may be used singly or in a combination of two or more.

The alkali metal content of the glass substrate is suitably at least about 2% by weight, preferably at least about 5% by weight, and more preferably at least about 10% by weight, calculated on an oxide basis. Although the maximum alkali metal content of the glass substrate is not particularly limited, the maximum content is suitably about 40% by weight, preferably about 30% by weight, and more preferably about 20% by weight, calculated on an oxide basis.

Any glass containing an alkali metal can be used in the present invention without particular limitation. Examples of glasses that can be used include silicate glasses, borosilicate glasses, phosphate glasses, fluorophosphate glasses, and the like.

The compositions of such glasses are not particularly limited. Any known silicate, borosilicate, phosphate, or like glass composition containing an alkali metal as described above can be used.

Specific examples of such glass compositions include the following, as calculated on an oxide basis.
1) Silicate glass containing 40 to 80% by weight, and preferably 50 to 75% by weight, of SiO₂; 5 to 25% by weight, and preferably 17 to 20% by weight, of CaO; 5 to 25% by weight, and preferably 7 to 20% by weight, of at least one member selected from the group consisting of Na₂O, K₂O, Li₂O, Rb₂O and Cs₂O; not more than 2% by weight, and preferably not more than 1.5% by weight of at least one member selected from the group consisting of MgO, BaO, ZnO, SrO and PbO; not more than 15% by weight, and preferably not more than 10% of Al₂O₃; and not more than 3% by weight, and preferably not more than 1% by weight, of at least one member selected from the group consisting of Fe₂O3 and SO₃.
2) Borosilicate glass containing 20 to 80% by weight, and preferably 30 to 75% by weight, of SiO₂; 5 to 50% by weight, and preferably 1 to 30% by weight, of B₂O₃; 2 to 20% by weight, and preferably 5 to 15% by weight, of at least one member selected from the group consisting of Na₂O, K₂O, Li₂O, Rb₂O and Cs₂O; not more than 30% by weight, and preferably not more than 25% by weight, of at least one member selected from the group consisting of MgO, CaO, BaO, ZnO, SrO and PbO; not more than 15% by weight, and preferably not more than 10% by weight, of at least one member selected from the group consisting of Al₂O₃, La₂O₃, Y₂O₃, Ta₂O₃ and Gd₂O₃; not more than 2% by weight, and preferably not more than 1% by weight, of at least one member selected from the group consisting of Nb₂O₅ and ZrO₂; not more than 2% by weight, and preferably not more than 1% by weight, of at least one member selected from the group consisting of As₂O₃, Sb₂O₃ and SnO.
3) Phosphate glass containing 40 to 80% by weight, and preferably 50 to 75% by weight, of P₂O₅; not more than 20% by weight, and preferably not more than 10% by weight, of SiO₂; 2 to 20% by weight, and preferably 5 to 15% by weight, of at least one member selected from the group consisting of Na₂O, K₂O, Li₂O, Rb₂O and Cs₂O; 2 to 50% by weight, and preferably 5 to 45% by weight, of at least one member selected from the group consisting of MgO, CaO, BaO, ZnO, SrO and PbO; not more than 15% by weight, and preferably not more than 10% by weight, of at least one member selected from the group consisting of B₂O₃, Al₂O₃, La₂O₃, Y₂O₃, Ta₂O₃, Nd₂O₃, and Gd₂O₃; not more than 2% by weight, and preferably not more than 1% by weight, of at least one member selected from the group consisting of Nb₂O₅ and ZrO₂.
4) Fluorophosphate glass obtained by substitution of F (fluorine) for some of the O (oxygen) of an original composition containing 20 to 50% by weight, and preferably 30 to 40% by weight, of P₂O₅; 5 to 30% by weight, and preferably 10 to 25%, of Al₂O₃; 2 to 20% by weight, and preferably 5 to 15% by weight, of at least one member selected from the group consisting of Na₂O, K₂O, Li₂O, Rb₂O and Cs₂O; and 10 to 50% by weight; and preferably 20 to 40% by weight, of at least one member selected from the group consisting of MgO, CaO, BaO, ZnO and SrO.
5) Borosilicate glass substrate containing 40 to 82% by weight of SiO₂; 12 to 50% by weight of B₂O₃; 2 to 25% by weight of at least one member selected from the group consisting of Na₂O, K₂O, Li₂O, Rb₂O and Cs₂O; not more than 25% by weight of at least one member selected from the group consisting of MgO, CaO, BaO, ZnO, SrO and PbO (the minimum amount thereof is preferably about 2% by weight to fully achieve the desired effects); not more than 20% by weight of at least one member selected from the group consisting of Al₂O₃, La₂O₃, Y₂O₃, Ta₂O₃ and Gd₂O₃ (the minimum amount thereof is preferably about 5% by weight to fully achieve the desired effects); not more than 10% by weight of at least one member selected from the group consisting of Nb₂O₅ and ZrO₂ (the minimum amount thereof is preferably about 1% by weight to fully achieve the desired effects); not more than 5% by weight of at least one member selected from the group consisting of AS₂O₃, Sb₂O₃ and SnO (the minimum thereof amount is preferably about 0.5% by weight to fully achieve the desired effects); and 0.05 to 10% by weight of at least one member selected from the group consisting of Cl, Br and I.

Among the above glass substrates, the borosilicate glass substrate in 5) is particularly preferable in the following respects. When a paste containing a copper compound is applied to the glass substrate to diffuse Cu⁺ ions into the glass substrate, UV absorption capability can be imparted to the glass substrate with light directivity. This is achieved because the diffused copper ions react with at least one halogen atom selected from the group consisting of Cl, Br and I, which is contained in the glass substrate, to form a copper halide, and the copper halide is diffused to thereby provide a glass substrate with a UV absorption capability.

The glass substrate to be used has a plate-like shape. For example, a mass of glass having a composition as mentioned above may be ground into a plate-like shape and used. Alternatively, molten glass having a composition as mentioned above may be molded into a plate-like shape, optionally followed by grinding, and used. More specifically, the shape of the glass substrate may be adjusted according to the size of the final planar light source product.

To produce the glass substrate with light directivity of the invention, a paste comprising at least one compound selected from the group consisting of lithium compounds, sodium compounds, potassium compounds, rubidium compounds, cesium compounds, copper compounds, silver compounds, and thallium compounds (these compounds are hereinafter also referred to collectively as "metal compounds") is applied to one or both sides of a glass substrate comprising an alkali metal as mentioned above as a glass component, and a heat treatment is performed at a temperature lower than the softening temperature of the glass substrate.

The paste to be used is one obtained by dispersing an organic resin and at least one compound selected from the group consisting of lithium compounds, sodium compounds, potassium compounds, rubidium compounds, cesium compounds, copper compounds, silver compounds, and thallium compounds in an organic solvent and forming the dispersion into a paste. Any paste can be used as long as the paste has a viscosity that allows its application onto a glass substrate and the paste contains a metal compound as mentioned above, which is capable of diffusing at least one member selected from the group consisting of lithium ions, sodium ions, potassium ions, rubidium ions, cesium ions, copper ions, silver ions, and thallium ions by heat treatment. More specifically, the paste viscosity can be suitably selected considering the application method, paste composition, conditions of diffusion into the substrate, etc. In particular, when the paste is applied using ink-jet printing as described below, the viscosity at 20°C is preferably about 102 to about 107cP, and more preferably about 103 to about 106cP.

When such a paste is applied to one or both sides of a glass substrate and a heat treatment is performed, the metal ions of the metal compound contained in the paste are exchanged with an alkaline component of the glass substrate, so that the metal ions diffuse into the glass substrate as Li⁺ ions, Na⁺ ions, K⁺ ions, Rb⁺ ions, Cs⁺ ions, Ag⁺ ions, Tl⁺ ions, or like ions. The portion containing such dispersed metal ions is a refractive-index-modulated region that differs in refractive index from the rest of the glass substrate, the region having a continuous refractive-index distribution that varies according to the concentration of the diffused ions. In particular, when Ag⁺ ions, Tl⁺ ions, or like ions are diffused, the potential refractive-index modulation range is wide, so that a desired refractive-index distribution can be easily obtained, thus being preferable. The metal compound contained in the paste is not particularly limited as long as it is an ionic metal compound capable of diffusing metal ions into a glass substrate by heat treatment. Inorganic salts are particularly preferable. Specific examples of metal compounds are described below.

Examples of lithium compounds include LiNO₃, LiCl, LiBr, LiI, LiF, Li₂SO₄, etc. Among these, LiNO₃, Li₂SO₄ , and the like are particularly preferable.

Examples of sodium compounds include NaNO₃, NaCl, NaBr, NaI, NaF, Na₂SO₄, etc. Among these, NaNO₃ , Na₂SO₄, and the like are particularly preferable.

Examples of potassium compounds include KNO₃, KCl, KBr, KI, KF, K₂SO₄, etc. Among these, KNO₃, K₂SO₄, and the like are particularly preferable.

Examples of rubidium compounds include RbNO₃, RbCl, RbBr, RbI, RbF, Rb₂SO₄ , etc. Among these, RbNO₃, Rb₂SO₄ , and the like are particularly preferable.

Examples of cesium compounds include CsNO₃, CsCl, CsBr, CsI, CsF, Cs₂SO₄, etc. Among these, CsNO₃, Cs₂SO₄, and the like are particularly preferable.

Examples of copper compounds include CuSO₄, CuCl, CuCl₂, CuBr, CuBr₂, Cu₂O , CuO, Cu(NO₃)₂, CuS , CuI , CuI₂ , Cu(NO₃)· 3H₂O, etc. Among these, CuSO₄ , Cu(NO₃)₂, and the like are preferable.

Examples of silver compounds include AgNO₃, AgCl, AgBr, AgI , AgF, Ag₂S, Ag₂SO₄, Ag₂O and the like. Among these, AgNO₃ is particularly preferable.

Examples of thallium compounds include TlNO₃, TlCl, TlBr, TlI , TlF , Tl₂S , Tl₂SO₄, Tl₂O and the like. Among these, TlNO₃ is particularly preferable.

Such metal compounds can be used singly or in a combination of two or more.

The organic resin contained in the paste is one that decomposes at the temperature of the heat treatment. Resins that are easily removable by washing with water are preferably used. Examples of such resins include cellulose resins, methyl cellulose resins, cellulose acetate resins, cellulose nitrate resins, cellulose acetate butyrate resins, acrylic resins, petroleum resins, etc. Such organic resins can be used singly or in a combination of two or more.

The organic solvent used in the paste is preferably a solvent in which a metal compound and an organic resin can be easily dispersed and that easily evaporates when dried. More specifically, a solvent that is a liquid at room temperature (about 20°C) and evaporates at a temperature of about 50°C to about 200°C is preferable. Examples of such solvents include alcohols such as methanol, ethanol, terpineol, and the like; dimethyl ether; ketones such as acetone, and the like; etc.

Although the content of each component in the paste is not particularly limited, the amount of organic solvent is usually 10 to 35 parts by weight, and preferably 12 to 30 parts by weight; and the amount of resin component is usually 25 to 55 parts by weight, and preferably 30 to 45 parts by weight; per 100 parts by weight of the metal compound.

If necessary, additives may be added to the paste. Examples of additives used to lower the melting point of the paste include sulfate, nitrate, chloride, bromide, iodide, bromate, and iodide of the alkaline component contained in the highest concentration in the glass. At least one member selected from the group consisting of sulfate and nitrate is particularly preferable. Although the amount of such additives is not particularly limited, it is usually not more than 200 parts by weight, and preferably not more than 180 parts by weight, per 100 parts by weight of the metal compound.

The proportions of the constituent components, including additives, can be suitably selected according to the purpose of the final product. For example, when a potassium compound, a rubidium compound, or a cesium compound is used as the metal compound, the amount of organic solvent is usually 2 to 25 parts by weight, and preferably 5 to 20 parts by weight; the amount of resin component is usually 15 to 45 parts by weight, and preferably 20 to 40 parts by weight; and the amount of additive is usually not more than 3 parts by weight; per 100 parts by weight of the potassium, rubidium, or cesium compound. In particular, when KNO₃ is used as the potassium compound, RbNO₃ is used as the rubidium compound, or CsNO₃ is used as the cesium compound, the above proportions are preferable. When a silver compound or a thallium compound is used as the metal compound, the amount of organic solvent is usually 15 to 45 parts by weight, and preferably 20 to 40 parts by weight; the amount of resin component is usually 50 to 170 parts by weight, and preferably 70 to 150 parts by weight; the amount of additive is usually not more than 180 parts by weight, and preferably not more than 160 parts by weight; per 100 parts by weight of the silver or thallium compound. In particular, when AgNO₃ is used as the silver compound or TINO₃ is used as the thallium compound, the above proportions are preferable.

The shape in which the paste is applied is not particularly limited. However, in view of the final product being used as a planar light source, light is preferably emitted uniformly in a specific direction from the entire viewed surface (refractive-index-modulated region-formed surface) of the planar light source. To do so, the paste is preferably applied continuously or regularly as circles or lines to one or both sides of a glass substrate. When the paste is continuously or regularly applied as circles, a microlens array is formed on the glass substrate after being subjected to heat treatment as described below. When the paste is continuously or regularly applied as lines, a cylindrical lens array is formed on the glass substrate after being subjected to heat treatment. To emit light in a specific direction from one side of the glass substrate, the paste may be applied to one side of the glass substrate. When a planar light source is disposed like a partition and used as a display board viewed from both sides of the substrate, the paste is applied to both sides of the glass substrate in order to emit directed light from both sides.

When the paste is applied as circles (also referred to as "dots" because the circles are small) or as lines (parallel lines), the distance between adjacent circles or adjacent parallel lines (i.e., the patterning distance) applied in circles is preferably not more than 100 µm. More specifically, when the paste is applied as circles, the paste is preferably applied in such a manner that the distance between the centers of adjacent circles is not more than 100µm. When the paste is applied as lines, the paste is applied in such a manner that the distance between the central axes of adjacent lines is not more than 100 µm. When the paste is applied as circles, the circles preferably have a diameter of about 5 to about 80 µm, and more preferably about 5 to about 50µm. When the paste is applied as lines, the line width is preferably about 5 to about 80 µm, and more preferably about 5 to about 50µm. In the lens array obtained after being subjected to heat treatment, the lenses, including cylindrical lenses, are preferably arranged in a high density pattern, in view of the efficiency of light directivity and elimination of light-emitting source nonuniformity. More specifically, in the cylindrical lens array, adjacent cylindrical lenses are preferably arranged in such a manner that the end portions thereof are in contact with each other (the entire paste-applied portions serve as lenses). In the microlens array formed by applying the paste as circles, the end portions of each lens may be overlapped with the end portions of adjacent lenses so as to enhance the lens density, as long as the effect of light directivity is not impaired. The glass substrate may be exposed between the lenses, depending on the patterning distance of the paste. In that case, masking can be performed to prevent undirected light from leaking from the exposed areas of the glass substrate. By performing such masking, the light can be more securely emitted in a specific direction from the viewed surface.

When the diffusion length in the depth direction of the glass substrate is defined as L, the applied paste also diffuses on the glass substrate surface outwardly from the paste-applied portions to a distance of about L. More specifically, when the paste is applied as circles, the diameter of each paste-applied circle is approximately the value obtained by subtracting twice the diffusion length in the depth direction from the diameter of the microlens obtained after being subjected to heat treatment. The paste may be applied, considering the above relationship with the diffusion length. That is, the paste can be applied in any manner as long as refractive-index-modulated regions having a micron- to submicron-sized diameter or line width are formed regularly and entirely on one or both sides of the glass substrate. By regularly arranging such tiny refractive-index-modulated regions, the light injected into the glass substrate can be emitted with a uniform luminance in a specific direction to the viewer's side. When a planar light source having such tiny refractive-index-modulated regions arranged regularly is viewed from a position several tens of centimeters to several meters away from the viewed surface, forwardly-directed light appears to be emitted with a uniform luminance from the entire planar light source.

Although the application method is not particularly limited, printing techniques such as screen printing and ink-jet printing are preferable. By using such printing techniques, precision dots and parallel lines can be easily formed. In particular, screen printing is a highly effective method because the paste can be applied to the entire glass substrate as about 10 µm-sized dots all at once. For example, applying the paste using the above printing technique (in particular, screen printing) is advantageous in that the paste can even be applied to a glass substrate of JIS A6 size (the so-called A6 paper size) or larger in a predetermined pattern with high efficiency.

The thickness of the applied paste is not particularly limited and can be suitably adjusted according to the kind, amount, etc. of metal compound contained in the paste. When the thickness of the applied paste is defined as A, and the dot diameter or parallel line width (when applied) is defined as B, the paste is preferably applied in such a manner as to meet the following equation: A/B≥0.5 (more preferably, to meet the following equation: A/B≥1).

After applying the paste, the obtained coating film is usually dried prior to heat treatment. The drying conditions are not particularly limited as long as the film is dried so that the solvent component is sufficiently removed and the paste is dried to a solid. Usually, the coating film can be efficiently dried by heating at a temperature of about 100°C to about 250°C for about 30 minutes to about 1.5 hours, and preferably at a temperature of about 150°C to about 200°C for about 45 minutes to about 1 hour.

Subsequently, the dried coating film is heat-treated. The heat treatment temperature is usually in the range of about 250°C to about 600°C, and preferably in the range of about 300°C to about 550°C, being set at a temperature below the softening temperature of the glass substrate. Although the heat treatment time can be suitably determined according to the temperature, it is usually about 10 minutes to about 100 hours, preferably about 30 minutes to about 50 hours, and more preferably about 1 to 25 hours. The heat treatment atmosphere is not particularly limited, and is usually an oxygen-containing atmosphere, such as in air.

After heat treatment, the substrate is usually allowed to cool to room temperature, and the paste residue remaining on the substrate is washed away with water.

Heat treatment using the above-mentioned method allows specific ions to diffuse into the glass substrate. The diffused metal ions exist as metal ions, metal oxides, metal fine particles, etc., depending on the treatment conditions. As a result, the portions containing such diffused metal ions differ in refractive index from the rest of the glass substrate and have a continuous refractive-index distribution. Usually, the substrate surface onto which the paste has been applied has the greatest refractive index. The greater the diffusion depth, the smaller the refractive index. For example, when the paste is applied as circles, the refractive index decreases continuously in the radial direction from the center of each circle. By forming a refractive-index distribution different from that of the rest of the substrate or forming refractive-index-modulated regions, a glass substrate with light directivity can be obtained.

When the glass substrate with light directivity of the invention is used as a component of a display screen, light can be emitted in a direction of the display front surface. Therefore, a combination of the glass substrate with a light-emitting source can serve as a backlight with excellent light directivity and a highly uniform luminance.

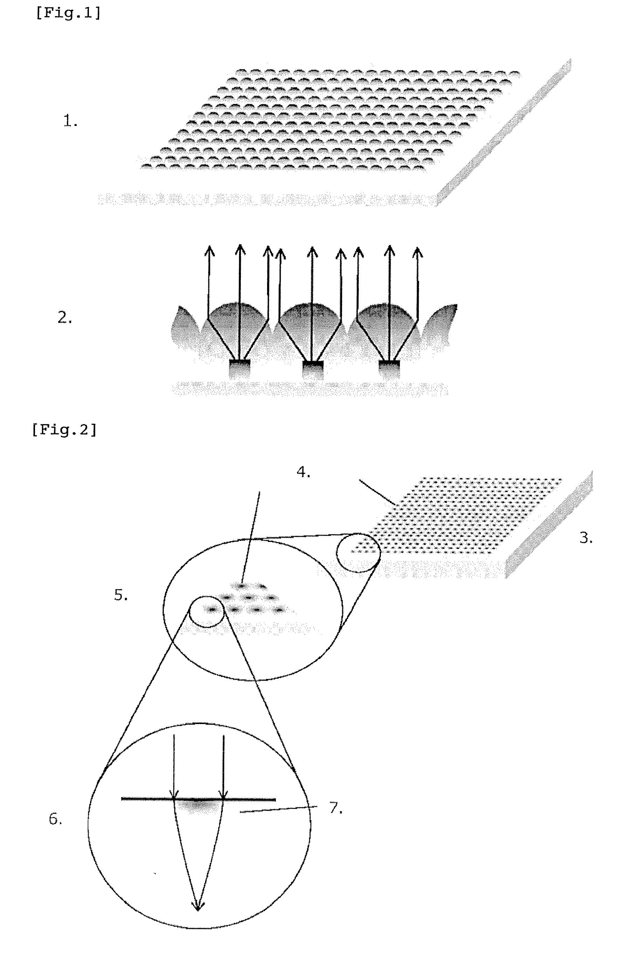

FIG. 2 shows a schematic diagram of a glass substrate with light directivity (one embodiment) of the invention. Illustration 3 of FIG. 2 shows a glass substrate with light directivity, and illustration 4 of FIG. 2 shows a microlens array obtained by regularly and continuously arranging dot-like refractive-index-modulated regions. Illustration 5 of FIG. 2 shows an enlarged schematic view of the microlens array. Illustration of FIG. 2 shows a sectional view of one refractive-index-modulated region, and illustration of FIG. 2 shows a refractive-index distribution in the depth direction of the glass substrate.

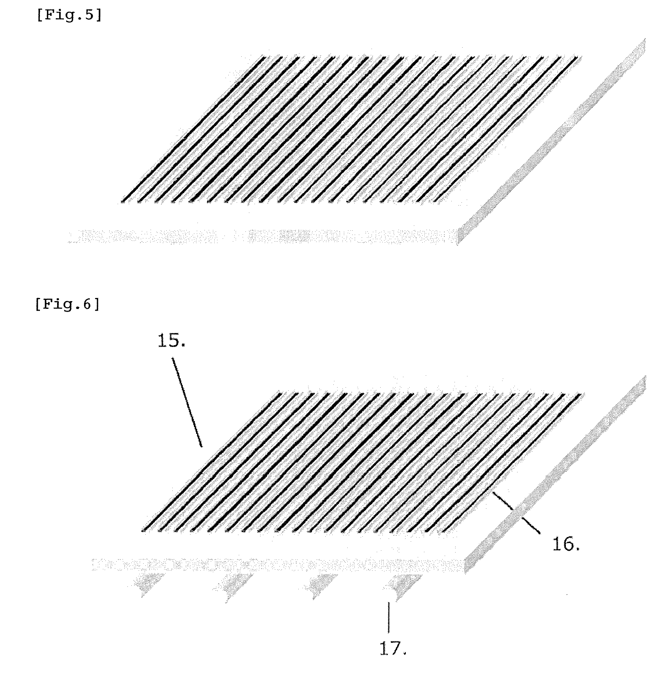

FIG. 5 is a schematic diagram of another glass substrate with light directivity (another embodiment) of the invention. FIG. 5 shows a glass substrate with light directivity comprising a cylindrical lens array. Even with use of such a cylindrical lens array, light injected into the glass substrate can also be emitted in a direction perpendicular to the glass substrate.

### Illuminator

The illuminator (planar light source) of the invention comprises: 1. the above-mentioned glass substrate with light directivity; and 2. the above-mentioned means for injecting light into the substrate.

The illuminator of the invention emits light with a uniform luminance in a specific direction by the following process. More specifically, light injected into a glass substrate with light directivity diffuses in the substrate, and then passes through a refractive-index-modulated region, whereby the light is emitted in a direction perpendicular to the substrate.

Examples of the means for injecting light into a glass substrate include a method comprising disposing a light-emitting source near the back face of the glass substrate with light directivity (i.e., the opposite side when refractive-index-modified regions are formed on one side of the glass substrate) or near a side face thereof so as to allow direct entry of light radiated from the light-emitting sources into the glass substrate. Another example may be a method comprising disposing a light-emitting source away from the glass substrate, and guiding light into the glass substrate using optical fibers or a waveguide. That is, any means for injecting light into a glass substrate may be used as long as it can directly or indirectly guide light radiated from a light-emitting source into the glass substrate, irrespective of the location of the disposed light-emitting source.

Examples of light-emitting sources include light-emitting elements, such as LED elements, organic EL elements, inorganic EL elements, and the like. Other examples of light-emitting sources include halogen lamps, metal halogen lamps, hot cathode tubes, cold cathode tubes, and the like. Hot cathode tubes, cold cathode tubes, and the like can be used as rod-like light emitters.

Light injected into the glass substrate is repeatedly scattered and reflected in the glass substrate, and finally emitted from the front face of the glass substrate with light directivity. By passing the light through a refractive-index-modulated region, uniform luminance and good directivity are obtained. To enhance the luminance and the directivity of light, arranging many tiny microlenses (structures with a small arrangement pitch) is preferable.

When refractive-index-modulated regions are formed on one side of a glass substrate, a light-reflecting plate may be laminated on the opposite side thereof. Lamination with a light-reflecting plate inhibits the leakage (loss) of light to thereby enhance light utilization efficiency. Although the material for the light-reflecting plate is not particularly limited, a material with a high reflectance such as aluminum, magnesium, silver, calcium, or the like is preferable.

The illuminator of the present invention will be illustrated below with reference to the attached drawings.

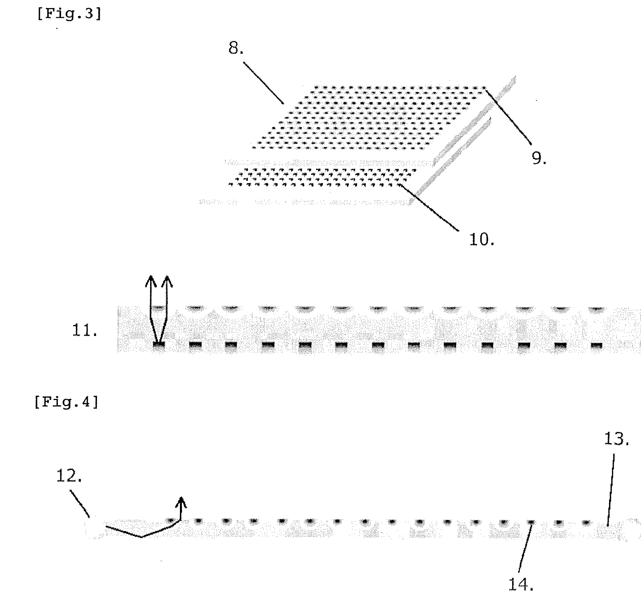

FIG. 3 shows a planar light source using LED chips as light-emitting sources. More specifically, the planar light source comprises: a substrate having LED chips regularly arranged thereon; and a microlens array comprising a plurality of microlenses overlaid on the substrate in such a manner that the microlenses are arranged in positions corresponding to the respective LED chips. Although FIG. 1 and FIG. 3 are different in the type of microlens array, i.e., the array of the present invention v.s. the prior-art array, both arrays have the same action (light-directive effect).

The planar light source of FIG. 3 radiates light from LDP chips and emits light in a specific direction. The lower diagram of FIG. 3 schematically shows how light is emitted in a specific direction. In FIG. 3, when alternating arrays of red-, green-, and blue-light-emitting semiconductor elements are used as light-emitting sources, white light emission can be obtained from the planar light source. Alternatively, white light can also be emitted by arranging blue-light-emitting semiconductor elements and applying to the front surface thereof a phosphor that is excited by blue light to emit red and green fluorescence or emit yellow fluorescence. Further alternatively, white light can also be emitted by arranging near-UV-light-emitting semiconductor elements and applying thereto a phosphor that is excited by near-UV light to emit blue, green and red fluorescence.

In addition to LED chips corresponding to the microlenses of FIG. 3, a rod-like light emitter may also be provided on a side face of the glass substrate to thereby inject light into the glass substrate. FIG. 4 is a schematic diagram of a planar light source comprising a rod-like light emitter provided on a side face of the glass substrate. Even in this case, the light diffused in the glass substrate is emitted in a direction perpendicular to the substrate. By passing through a microlens array that forms refractive-index-modulated regions, light is emitted in a direction perpendicular to the substrate.

FIG. 6 shows an example of a planar light source having a plurality of rod-like light emitters, such as cold cathode tubes, disposed on the back face. In the planar light source of FIG. 6, light is passed through a cylindrical lens array, so that the emitted light has a uniform luminance even in a direction perpendicular to the cold cathode tubes. More specifically, when the glass substrate with light directivity of the invention is used, the luminance nonuniformity of the light-emitting sources (cold cathode fluorescent tubes in FIG. 6) can be eliminated.

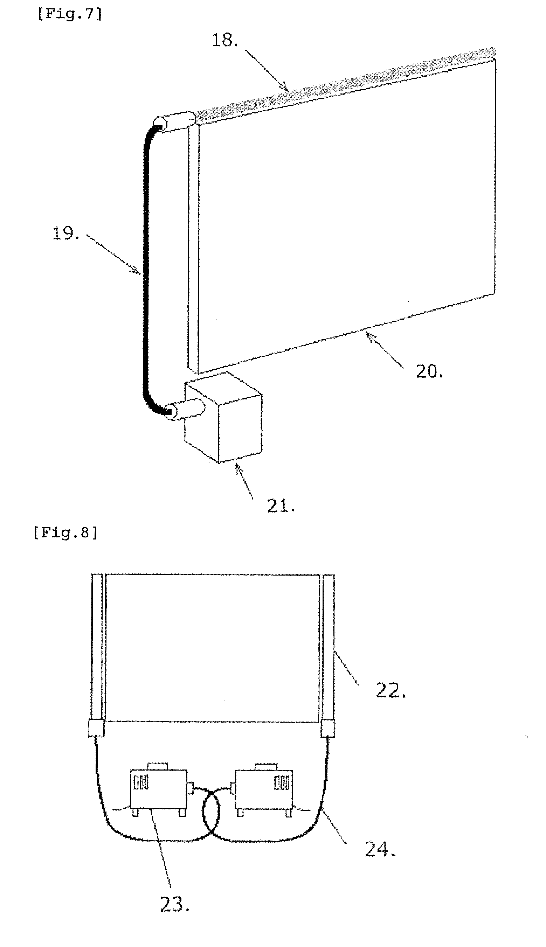

FIGS. 7 and 8 show examples of planar light sources in which a light-emitting source is disposed away from the glass substrate with light directivity. In both examples, light emitted from a light-emitting source is passed through optical fibers to guide the light to a side face of the glass substrate and inject the light into the glass substrate through a rod-like light emitter.

### EFFECT OF THE INVENTION

The present invention, which uses a glass substrate, can produce a glass substrate having a higher-precision refractive-index-modulated structure with light directivity, as compared to organic polymer substrates. The glass substrate with light directivity of the invention is excellent in terms of heat resistance, light resistance, and weather resistance. The above method of producing a refractive-index-modulated structure in a glass substrate can easily produce a micron- to sub-millimeter-sized, tiny refractive-index-modulated structure by applying a paste using various printing techniques and does not require a technique such as photolithography nor the use of a metal mold, so that high-variety, mass production can be achieved at low cost, as compared with ion exchange methods using molten salts or pressing using metal molds.

According to the present invention, a planar light source with a uniform luminance and good light directivity can be produced using a simple mass-production method, without the need to substantially change the basic arrangement of a known planar light source. Furthermore, by appropriately designing the refractive-index-modulated structure, a planar light source with a specific luminance distribution and specific light directivity can also be provided at low cost. Such planar light sources can be used for high-resolution exposure systems, high-luminance energy-saving displays, lighting systems, etc.

By combining such a glass substrate having light directivity with light-emitting sources, an illuminator capable of emitting a highly uniform light in a highly specific direction from a glass substrate can be obtained.

### BRIEF DESCRIPTION OF THE DRAWINGS

FIG. 1 is an explanatory diagram of a known planar light source (one example).
FIG. 2 is an explanatory diagram of a glass substrate with light directivity of the invention (one embodiment).
FIG. 3 is an explanatory diagram of an illuminator of the invention (one embodiment).
FIG. 4 is an explanatory diagram of an illuminator of the invention (another embodiment).
FIG. 5 is an explanatory diagram of a glass substrate with light directivity of the invention (another embodiment).
FIG. 6 is an explanatory diagram of an illuminator of the invention (another embodiment).
FIG. 7 is an explanatory diagram of an illuminator of the invention (another embodiment).
FIG. 8 is an explanatory diagram of an illuminator of the invention (another embodiment).

### DESCRIPTION OF REFERENCE NUMERALS

1. An example of a known substrate with light directivity (microlens array)
2. A schematic diagram showing how light radiated from LED light sources is emitted in a specific direction by passing through the known microlens array
3. An embodiment of the glass substrate with light directivity of the invention
4. A microlens array formed by regularly and continuously arranging refractive-index-modulated regions
5. An enlarged view of the refractive-index-modulated regions
6. A sectional view of one refractive-index-modulated region
7. A schematic diagram showing a refractive-index distribution in the depth direction of the glass substrate
8. Another embodiment of the glass substrate with light directivity of the invention
9. A microlens array formed by regularly and continuously arranging refractive-index-modulated regions
10. An example of light-emitting sources (LED light sources)
11. A schematic diagram showing how light radiated from the LED light sources is directed in a specific direction by passing through the microlens array of the invention
12. A rod-like light emitter
13. Another embodiment of the glass substrate with light directivity of the invention
14. A refractive-index-modulated region
15. Another embodiment of the glass substrate with light directivity of the invention
16. A cylindrical lens array formed by regularly and continuously arranging refractive-index-modulated regions
17. A rod-like light emitter
18. A rod-like light emitter
19. Optical fibers
20. Light-emitting portion of an illuminator (refractive-index-modulated regions are not shown)
21. A light-emitting source
22. A rod-like light emitter
23. A light-emitting source
24. Optical fibers.

## Claims

1. A glass substrate with light directivity produced by applying a paste comprising at least one member selected from the group consisting of lithium compounds, sodium compounds, potassium compounds, rubidium compounds, cesium compounds, copper compounds, silver compounds, and thallium compounds; an organic resin; and an organic solvent to one or both sides of a glass substrate comprising an alkali metal as a glass component, and performing a heat treatment at a temperature lower than the softening temperature of the glass substrate.

2. A glass substrate with light directivity according to claim 1 wherein the paste is applied in circle or line form.

3. A glass substrate with light directivity according to claim 1 wherein the paste is applied as a plurality of circles in such a manner that the distance between the centers of adjacent circles is not more than 100 µm.

4. A glass substrate with light directivity according to claim 1 wherein the paste is applied as a plurality of parallel lines in such a manner that the distance between the central axes of adjacent lines is not more than 100 µm.

5. A glass substrate with light directivity according to claim 1 wherein the paste is applied by screen printing or ink-jet printing.

6. A glass substrate with light directivity according to claim 1 wherein the glass substrate comprises glass containing at least 2% by weight of an alkali metal, calculated on an oxide basis, the glass being a silicate glass, a borosilicate glass, a phosphate glass, or a fluorophosphate glass.

7. An illuminator comprising: 1) the glass substrate with light directivity of claim 1; and 2) means for injecting light into the substrate.

8. An illuminator according to claim 7 wherein the means for injecting light into the substrate is a device for injecting light radiated from an LED element, an organic EL element, or an inorganic EL element.

9. An illuminator according to claim 7 wherein the means for injecting light into the substrate is a device for injecting light radiated from a halogen lamp, a metal halogen lamp, a hot cathode tube, or a cold cathode tube.
